# EUROPEAN PATENT APPLICATION

(11) **EP 3 396 218 A1**
(43) Date of publication of application: **31.10.2018**
(21) Application number: 18168271.7
(22) Date of filing: 19.04.2018
(51) Int. Cl.: F16K 31/40

(54) **PILOT OPERATED VALVE WITH EXTENDED INSERT**

(30) Priority: 26.04.2017 US 201715497329
(71) Applicant: ROBERTSHAW CONTROLS COMPANY, Itasca, IL 60143 (US)
(72) Inventor: Bergbauer, Kenneth A., Bartlett, IL 60103 (US); Berkley, Paul Charles, Shorewood, IL 60404 (US)
(74) Representative: Cohausz & Florack

(57) **Abstract**

A pilot operated valve (10) is provided. The pilot operated valve includes a valve body (12) defining an inlet (14), an outlet (24) and a main valve seat (26). The pilot operated valve includes a valving member (18) having a diaphragm (30) and an insert (34). The insert defines a pilot valve seat and an insert stem (36). The valving member selectively seals against the main valve seat to separate the inlet from the outlet. The pilot operated valve includes a solenoid assembly (84) having an armature (62) with an armature end. The armature end and the pilot valve seat are located inside the guide tube (60). The armature end selectively seals against the pilot valve seat inside the guide tube.

## Description

This invention generally relates to pilot operated valves.

### BACKGROUND OF THE INVENTION

Pilot operated valves are generally described in U.S. Patent No. 4,500,067 (hereinafter, "067") the entire teachings and disclosures of which are incorporated herein by reference. Disclosed in the '067 patent is a solenoid actuated water inlet valve employed for appliances such as, for example, icemakers and humidifiers. Such pilot valves utilize a valving member having flexible diaphragm and rigid insert. The diaphragm of such valves separates the inlet from the outlet of the valve and divides a valving chamber into upper and lower chambers. The rigid insert defines a pilot valve flow passage extending from the upper valving chamber to fluidly connect with the outlet. The insert includes a pilot valve seat at its upper tip, and a main valve pad at its lower stem. The lower stem and diaphragm seal against the main valve seat in the valve's closed state.

A compression spring urges the insert to close the main valve seat. However, a bleed passage through the diaphragm and insert permits water to fill the upper valving chamber while maintaining the sealed separation between the inlet and outlet. A guide tube containing an armature has a valve pad at its tip that is seated against the insert pilot valve seat in the closed, de-energized state, of the valve.

Upon energization of a coil around the guide tube, an armature valve pad lifts off the pilot valve seat to open the pilot flow passage. The pressure then decreases in the upper chamber and the flexible diaphragm until the lower chamber valve pressure overcomes the upper chamber pressure so as to pop the flexible diaphragm up along with the insert to lift the insert off the main valve seat to allow water to flow directly from the inlet to the valving chamber and out through the outlet.

Unfortunately, designs of such valves just described provide a diaphragm insert having an armature tip with a valve pad outside the narrow portion of the guide tube. This allows excess side play by the armature and causes guide-tube wear as well as misalignment between the armature tip and the pilot valve seat. Because such designs locate the pilot valve seat outside the guide tube, the armature must extend the entire length of the guide tube, which means, the armature is longer and heavier than desired such that the long and heavy armature causes excessive wear on the guide tube as well as the insert stem at its tip sealing against the main valve seat.

Further, such designs provide for an insert stem that extends through the main valve seat and into the outlet even when the main valve is open. Extension of the insert stem through the main valve seat into the outlet decreases water flow through the valve body during operation due to the restriction caused by the inlet stem in the flow path to the outlet. Additionally, such insert stems become obstructions between the valving chamber and the outlet which increases the chances of particles being trapped between the inlet stem and the outlet near the main valve seat during operation.

The invention provides a new and improved pilot operated valve. These and other advantages of the invention, as well as additional inventive features, will be apparent from the description of the invention provided herein.

### BRIEF SUMMARY OF THE INVENTION

In one aspect, the invention provides a pilot operated valve comprising a valve body defining an inlet, an outlet and a main valve seat. The pilot operated valve includes a valving member having a diaphragm and an insert. The insert defining a pilot valve seat and an insert stem. The valving member selectively seals with the main valve seat to separate the inlet from the outlet. The pilot operated valve includes a solenoid assembly comprising an armature having an armature end. The armature end and pilot valve seat are located inside the guide tube. The armature end selectively seals against the pilot valve seat inside the guide tube.

In another aspect, the invention provides a pilot operated valve comprising a valve body defining an inlet, an outlet and a main valve seat. A main flow channel is defined by the valve body through the inlet, over the main valve seat to the outlet. The pilot operated valve includes a valving member having a diaphragm and an insert. The insert defines a pilot valve seat and an insert stem. The valving member selectively seals against the main valve seat to close the main flow channel. The pilot operated valve includes a solenoid assembly comprising an armature having an armature end inside a guide tube. The armature end selectively seals against the pilot valve seat inside the guide tube. In a fully open position of the pilot valve, the insert stem is located above the main valve seat and outside the outlet when unseated from the main valve seat to open the main flow channel.

In an embodiment, the valving member includes an insert having a central disk portion and an extended center post. The extended center post extends from the central disk portion axially away from the outlet. The extended center post defining the pilot valve seat located inside the guide tube.

In another embodiment, the extended center post includes insert ribs defining insert channels between the insert ribs. The insert channels extend axially from the central disk portion to the pilot valve seat along the extended center post.

In another embodiment, the valving member defines a bleed passage fluidly connecting the inlet to the inside of the guide tube.

In yet another embodiment, the armature end comprises a pilot valve pad selectively sealing against the pilot valve seat.

In still another embodiment, the insert defines an axially centered pilot valve passage fluidly connecting the inlet to the outlet when the pilot valve pad unseats from the pilot valve seat.

In an embodiment, in a fully open position of the pilot valve the insert stem is unseated from the main valve seat outside the outlet.

In an embodiment, the center post defines insert channels extending from the central disk portion to the pilot valve seat.

In another embodiment, the valving chamber within the valve body surrounds the valving member. The valving member divides the valving chamber into an upper valving chamber and lower valving chamber.

In still another embodiment, the upper valving chamber includes a hollow cylindrical region inside the guide tube.

In yet another embodiment, the length of the armature is less than or equal to eighty percent of the length of the guide tube.

In another embodiment, the insert channels are radially inward of the innermost peripheral surface of the guide tube to permit a fluid flow between the insert channels and the innermost peripheral surface of the guide tube.

In yet another aspect, the invention provides a method for operating a pilot operated valve. The method comprises the steps of selectively sealing a main valve seat against a valving member to separate an inlet from an outlet of a valve body and to divide an upper valving chamber from a lower valving chamber. The method further comprises the step of fluidly connecting the lower valving chamber to the upper valving chamber through a bleed passage defined by the valving member. The method includes the step of unseating a pilot valve pad of an armature from a pilot valve seat inside a guide tube of a solenoid assembly to fluidly connect the upper valving chamber to the outlet. The method includes the step of decreasing the pressure in an upper valving chamber to unseat the valving member from the main valve seat to open a main flow channel from the inlet over the main valve seat to the outlet.

In an embodiment, the method further comprises the step of fluidly connecting the upper valving chamber to the outlet through a pilot flow passage inside an extended center post of the valving member.

In another embodiment of the method, the step of unseating the valving member from the main valve seat further includes locating the valving member above the main valve seat and outside the outlet to open the main flow passage.

In yet another embodiment, the method further comprises the step of locating the pilot valve seat on an end of an extended center post of the valving member and inside the guide tube.

In still another embodiment, the method includes the step of locating the pilot valve pad on an end of the armature inside the guide tube.

In another embodiment of the method, energizing the solenoid assembly unseats the pilot valve seat inside the guide tube.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a cross sectional view of an embodiment of the valve of the present invention in a fully open position and energized state;
FIG. 2 is an enlarged perspective view of the rigid insert of the valve of FIG. 1;
FIG. 3 is a cross sectional view of an embodiment of the valve of the present invention in a fully closed and de-energized state;
FIG. 4 is a cross sectional view of an embodiment of the valve of the present invention in a partially open and energized state;
FIG. 5. is a cross sectional view of an embodiment of the valve of the present invention in a partially closed and de-energized state;

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

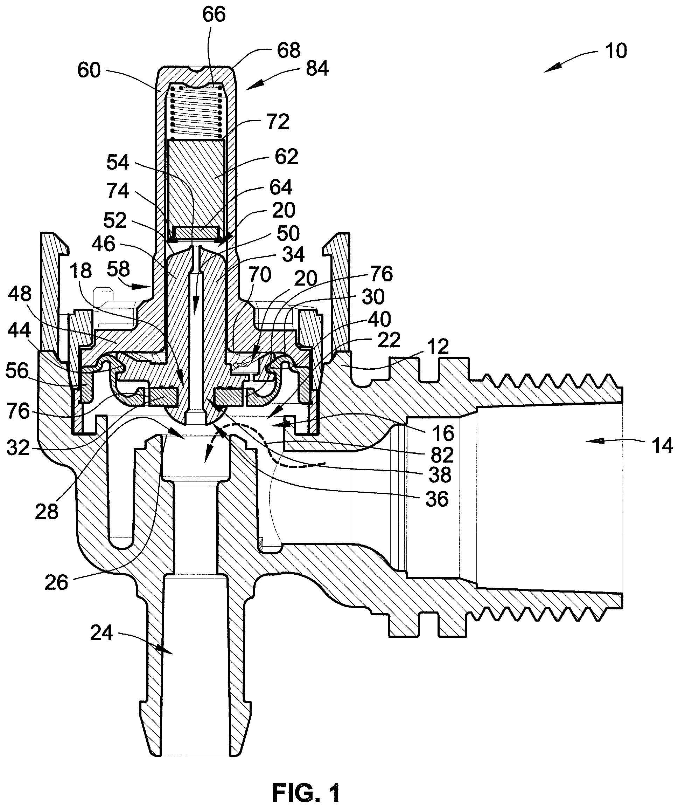

FIG. 1 illustrates an embodiment of the new and improved pilot operated valve 10. The valve 10 includes a valve body 12 having an inlet 14 in fluid communication with a valving chamber 16 enclosing a valving member 18. Valving member 18 divides valving chamber 16 into an upper valving chamber 20 and a lower valving chamber 22. The valve body 12 further includes an outlet passage 24 also communicating with the valving chamber 16.

The valve body 12 defines a main valve seat 26. The main valve seat 26 is located at the intersection of the outlet passage 24 with the valving chamber 16. The main valve seat 26 is located at a first end of outlet passage 24. Main valve seat 26 defines an entry port 28 into outlet passage 24.

Valving member 18 includes resilient diaphragm 30 which has a thickened central valve portion 32. Valving member 18 also includes a rigid insert 34. An insert stem 36 of the rigid insert 34 passes through an aperture 38 defined by the thickened central valve portion 32, to facilitate the connection between the rigid insert 34 and resilient diaphragm 30.

Resilient and rigid are understood as comparative qualities relative to the diaphragm and insert. That is, by rigid it is meant that fluid pressures reached during normal operations of the valve 10 act on the rigid insert 34 without causing any appreciable deformation to the rigid insert 34. Resilient is understood to mean that fluid pressures reached during normal operation of the valve 10 may act to deform, that is move axially at least a portion of resilient diaphragm 30, while the remaining portion of resilient diaphragm 30 remains fixed, thereby permitting the resilient diaphragm to "pop" open or closed.

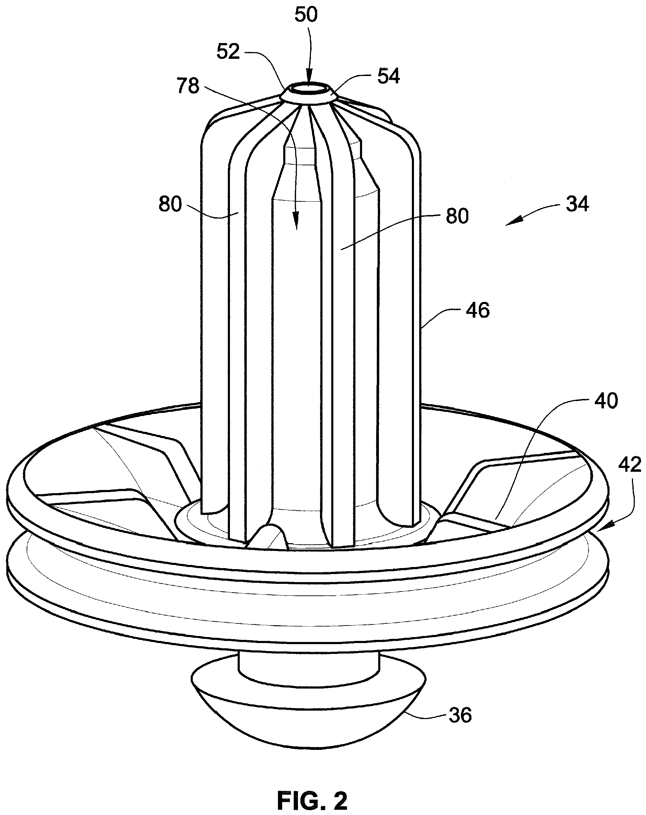

Rigid insert 34 includes a central disk portion 40 having a groove 42 (FIG. 2) extending circumferentially around the radially outermost surface of the central disk portion 40. The groove 42, receives a matching tongue 44 of the resilient diaphragm 30 to secure the rigid insert 34 to resilient diaphragm 30.

The rigid insert 34 has an extended center post 46 extending upwardly from the central disk portion 40. By extending upwardly, it is meant in an axial direction of extension away from the outlet passage 24. The rigid insert 34 also includes the insert stem 36. Insert stem 36 extends downwardly from the central disk portion 40. By downwardly, it is understood to mean in an axial direction of extension towards the outlet passage 24.

The rigid insert 34 defines a pilot flow passage 50, axially centered within the rigid insert 34 and extending axially from a tip 52 at an upper most surface of the rigid insert 34 to the insert stem 36. The tip 52 defines a pilot valve seat 54. Accordingly, the rigid insert 34 has a first end, insert tip 52, defining the pilot valve seat 54 and the rigid insert 34 has a second end, insert stem 36.

The outer periphery of resilient diaphragm 30 is received in the valve body 12 in an annular groove 56 formed in the valve body 12 and retained in the annular groove 56 by an armature guide member 58.

The armature guide member 58 has a guide tube 60 that is hollow. The guide tube 60 has a first end 68 and a second end 70. The guide tube 60 has a length defined between the first end 68 and the second end 70. A flange portion 48 of the armature guide member 58 extends radially from the second end 70 to seal with the valve body 12 and to retain the resilient diaphragm 30 in the annular groove 56.

The guide tube 60 of reduced diameter relative to the flange portion 60 slideably receives therein an armature 62. The armature has an upper end 72 and a lower end 74 with its full length defined therebetween. The lower end 74 of armature 62 includes a pilot valve pad 64.

A compression spring 66 is received in the guide tube 60 and abuts the first end 68 of the guide tube 60. The compression spring 66 urges the armature 62 in an axially downward direction toward the outlet 24 to cause the pilot valve pad 64 to contact the pilot valve seat 54 inside the guide tube 60. By inside, it is meant, in the hollow portion of the guide tube 60 between the first end 68 and the second end 70. No portions of valve pad 64 or pilot valve seat 54 are located outside of guide tube 60. In an embodiment, the full length of the armature 62 may be less than the full length of the guide tube 60. In a preferred embodiment the full length of the armature 62 may be less than eighty percent of the full length of the guide tube 60. In a more preferred embodiment, the full length of the armature 62 may be less than 70 percent of the full length of the guide tube 60. In a still more preferred embodiment, the full length of the armature 62 may be less than 60 percent of the full length of the guide tube 60.

A pressure equalizing bleed passage 76 is provided through the thickened central valve portion 32, at a radially outward portion thereof, and through rigid insert 34 permitting limited continuous communication of the lower valving chamber 22 with the upper valving chamber 20 comprising the hollow region of the armature guide tube 60 disposed above the resilient diaphragm 30.

In operation, as fluid passes through bleed passage 76, fluid flow to the insert tip 52 in the upper valving chamber 20 is facilitated by insert channels 78 (FIG. 2) formed between insert ribs 80 (FIG. 2). Insert ribs 80 project radially outward from the extended center post 46. The insert channels 78 and insert ribs 80 are circumferentially and equally spaced around extended center post 46. (FIG. 2) The insert channels 78 extend axially from the central disk portion 40 of the rigid insert 34 to the insert tip 52. (FIG. 2)

Advantageously, the insert channels 78 act as an external insert flow path that extends from the central disk portion 40 to the pilot valve seat 54 in the upper valving chamber 20. By external it is meant that unlike pilot flow passage 50 which is inside rigid insert 34, the insert channels are defined by external surfaces of rigid insert 34. The extended center post 46 advantageously permits the center post 46 to be located within the armature guide tube 60 such that the pilot valve seat 54 and the pilot valve pad 64 at the lower end 74 of armature 62 are all located inside the guide tube 60.

As previously discussed, existing diaphragm inserts meet at the armature tip outside the guide tube and in their flange portions of increased diameter relative to the reduced diameter of their guide tubes. Unfortunately, such structure allows excess side play by the armature and causes guide-tube wear as well as misalignment between the armature tip and the mating tip on the insert.

Accordingly, the embodiment described herein advantageously extends the insert tip 52 and pilot valve seat 54 axially upward into the guide tube 60. This advantage is facilitated in part in an embodiment where the extended center post 46 is longer than the length of the insert stem 36. In a preferred embodiment, the extended center post 46 is at one and a half times the length of the insert stem 36 and in a more preferred embodiment, the extended center post 46 is at least twice the length of the insert stem 36. Thus, contact between the pilot valve pad 64 and the pilot valve seat 54 to close pilot flow channel 50 is made inside of the armature guide tube 60. Doing so means the armature 62 can be made shorter relative to those that extend nearly the entire length of their guide tubes, requiring less material and reducing cost.

In addition to the foregoing, as previously discussed, existing diaphragm inserts include an exit stem which protrudes into the main valve seat, axially into the outlet at all times to prevent misalignment. Such valve stems are thus inside the outlet passage. However, in the embodiment herein described, the extended center post 46 allows the insert guidance to be provided by the armature guide tube 60. Doing so means most of the insert stem 36 can be removed from penetrating downwardly inside the main valve seat 26 into the outlet 24. Thus, insert stem 36 when fully unseated from main valve seat 26 is outside of the outlet passage 20 and above the main valve seat 26.

Removal of the insert stem 36 from penetrating below the main valve seat 26 through entry port 28 into the outlet 24 provides the advantage that with the main valve seat 26 and outlet 24 free of the insert stem 36 and indeed all of rigid insert 34, fluid flow may increase through the valve body 12 during operation.

Further, removal of the insert stem 36 from its penetration inside the outlet 24 advantageously reduces the chances of particles being trapped between the insert stem 36 and the main valve seat 26 during operations described below.

Moreover, because of the extended center post 46 axially extends upwardly into the armature guide tube 60, then the armature 62 may be advantageously reduced in size and weight relative to armatures that extend nearly the full axially length of their guide tubes as is generally known, in prior pilot operated pressure differential valves. Such reduced size and weight of the armature advantageously provides for decreased cost. Further, because of the decreased size and weight, there is decreased wear on the guide tube 60, pilot valve pad 64 and pilot valve seat 54.

Turning now to describe operation of the valve 10, a solenoid coil assembly 84 includes armature 62 and has an encapsulated coil (not illustrated) that energizes and deenergizes the valve 10. The guide tube 60 has received thereover pole piece tubes of ferromagnetic material (not illustrated). The encapsulated electrical coil is received over pole piece tubes.

In operation, when the coil is energized, the magnetomotive force generated causes armature 62 to overcome the bias of compression spring 66 and move upwardly, that is axially away from outlet 24 thereby moving pilot valve pad 64 upwardly to unseat from pilot valve seat 54 to open pilot flow passage 50 as illustrated in FIG. 1.

Opening pilot flow passage 50 permits fluid in upper valving chamber 20 to flow to the outlet 24 at a greater rate than water can flow into upper valving chamber 20 through bleed passage 76. This causes a loss of pressure in upper valving chamber 20, which creates a pressure differential across resilient diaphragm 30. The compression spring 66 is preselected along with the resilient diaphragm 30 so as to permit, at a preselected pressure differential across the resilient diaphragm 30 to "pop," that is move its central valve portion 32 axially upwards in a direction of extension away from outlet 24, to unseat insert stem 36 from main valve seat 26 to open a main flow channel 82 extending from inlet 14 to the valving chamber 16 and over main valve seat 26 and into outlet 24 to exit valve body 12.

Thus, valve 10 as illustrated in FIG. 1 is fully open when pilot valve pad 64 is unseated from pilot valve seat 54 and insert stem 36 is fully unseated from main valve seat 26. As illustrated in FIG. 1, when insert stem 36 unseats from main valve seat 26 it is above main valve seat 26, and rigid insert 34 is outside outlet 24. Thus, rigid insert 34 does not act as an obstruction inside of outlet 24 to flow through the outlet 24 when the pilot valve 10 is fully open.

When the coil is de-energized, compression spring 66 biases pilot valve pad 64 of the armature 62 downwardly to seat against pilot valve seat 54 inside the guide tube 60 to stop the flow of fluid through pilot flow passage 50. Fluid pressure then increases in the upper valving chamber 20 and biases the rigid insert 34 towards main valve seat 26, closing the path for fluid to flow from the inlet 14 to the outlet 24.

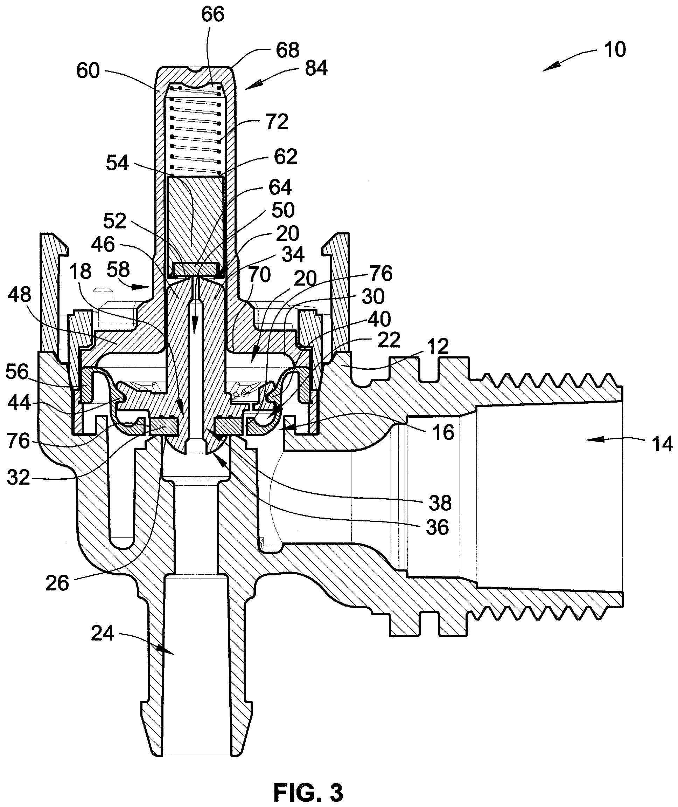

Thus, valve 10 may be considered to have four states. In the first state, as illustrated in FIG. 3, the valve 10 is de-energized and in a fully closed condition. That is, the pilot valve pad 64 is seated against pilot valve seat 54 and insert stem 36 and diaphragm 30 are seated against main valve seat 26 such that there is not any fluid flow between the inlet 14 and outlet 24.

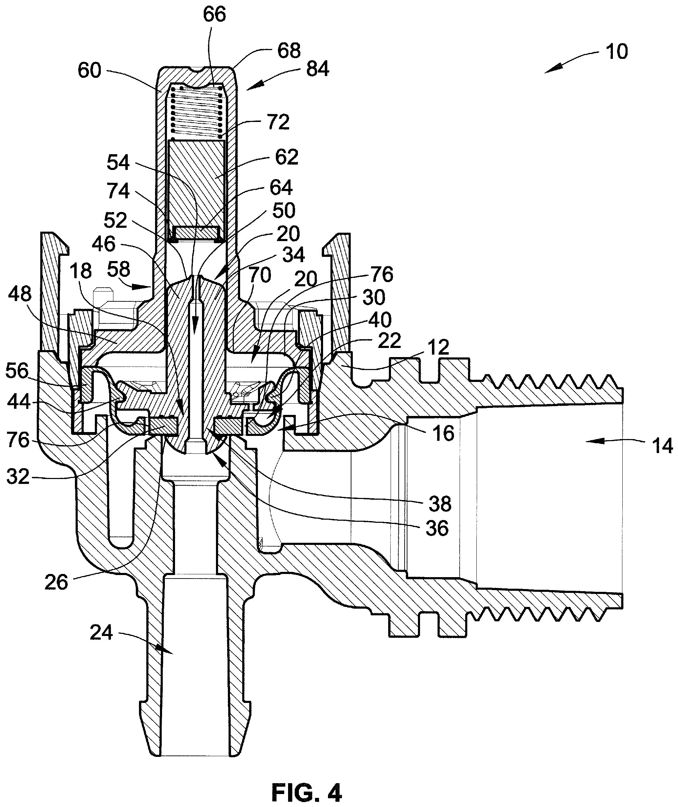

In the second state, as illustrated in FIG. 4, the valve 10 is energized and in a partially open condition. As described above, when the coil is energized, pilot valve pad 64 is unseated from pilot valve seat 54 within the guide tube 60 to open pilot flow passage 50 to allow fluid to flow from the upper valving chamber 20 to the outlet 24. Pressure in the upper valving chamber 20 decreases. Insert stem 36 and diaphragm 30 remain seated against main valve seat 26.

In the third state, as illustrated in FIG. 1, the valve 10 is energized and in a fully open condition. In the third state, pressure in the upper valving chamber 20 has decreased such that a pressure differential exists across resilient diaphragm 30. At the preselected pressure differential the resilient diaphragm "pops" upward as previously described so as to unseat insert stem 36 from the main valve seat 26. In this fully open state, pilot valve pad 64 remains unseated from pilot valve seat 54 within the guide tube 60, however, insert stem 36 and diaphragm 30 are unseated from main valve seat 26 to open main flow channel 82 so as to allow fluid flow from inlet 14 to valving chamber 16 then over main valve seat 26, through entry port 28 and into outlet 24 to exit the valve body 12 through outlet 24.

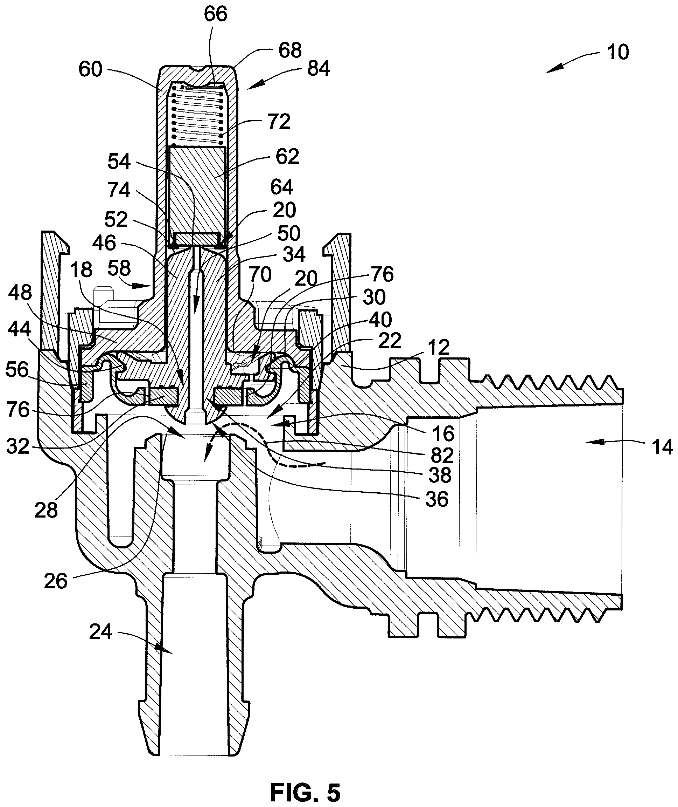

In the fourth state, as illustrated in FIG. 5, the valve 10 is de-energized and in a partially closed condition. As described above, compression spring 66 biases pilot valve pad 64 of the armature 62 downwardly to seat against pilot valve seat 54 inside the guide tube 60 to stop the flow of fluid through pilot flow passage 50. Fluid pressure then increases in the upper valving chamber 20.

The valve 10 returns to the first state once the fluid pressure increases in the upper valving chamber 20 and exceeds the pressure of lower valving chamber 22. Once the upper valving chamber 20 has reached the preselected upper valving chamber 20 pressure, the upper valving chamber 20 pressure and the spring force of compression spring 66 combine to "pop" resilient diaphragm 30 axially downward together with insert stem 36, such that insert stem 36 and diaphragm 30 seat against main valve seat 26, closing the path for fluid to flow through the main valve seat 26.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

The following embodiments are also disclosed:
1. A pilot operated valve comprising:
   a valve body defining an inlet, an outlet and a main valve seat;
   a valving member having a diaphragm and an insert, the insert defining a pilot valve seat and an insert stem, the valving member selectively sealing against the main valve seat to separate the inlet from the outlet;
   a solenoid assembly comprising an armature having an armature end;
   wherein the armature end and pilot valve seat are located inside the guide tube and wherein the armature end selectively seals against the pilot valve seat inside the guide tube.
2. The pilot operated valve of embodiment 1, wherein the insert comprise a central disk portion and an extended center post, the extended center post extending from the central disk portion axially away from the outlet, the extended center post defining the pilot valve seat located inside the guide tube.
3. The pilot operated valve of embodiment 2, wherein the extended center post includes insert ribs defining insert channels between the insert ribs, the insert channels extending axially from the central disk portion to the pilot valve seat along the extended center post.
4. The pilot operated valve of embodiment 3, wherein the valving member defines a bleed passage fluidly connecting the inlet to the inside of the guide tube.
5. The pilot valve of embodiment 2, wherein armature end comprises a pilot valve pad selectively sealing against the pilot valve seat.
6. The pilot valve of embodiment 5 wherein the insert defines an axially centered pilot valve passage fluidly connecting the inlet to the outlet when the pilot valve pad unseats from the pilot valve seat.
7. The pilot valve of embodiment 2, wherein in a fully open position of the pilot valve the insert stem is unseated from the main valve seat outside the outlet.
8. A pilot operated valve comprising:
   a valve body defining an inlet, an outlet and a main valve seat;
   a main flow channel defined by the valve body through the inlet, over the main valve seat to the outlet;
   a valving member having a diaphragm and an insert, the insert defining a pilot valve seat and an insert stem, the valving member selectively sealing against the main valve seat to close the main flow channel;
   a solenoid assembly comprising an armature having an armature end inside a guide tube, the armature end selectively sealing against the pilot valve seat inside the guide tube;
   wherein, in a fully open position of the pilot valve, the insert stem is located above the main valve seat and outside the outlet when unseated from the main valve seat opening the main flow channel.
9. The pilot valve of embodiment 8, wherein the valving member comprises an insert having a central disk portion and an extended center post, the extended center post extending from the central disk portion axially away from the outlet and defining the pilot valve seat located inside the guide tube.
10. The pilot valve of embodiment 9, wherein center post defines insert channels extending from the central disk portion to the pilot valve seat.
11. The pilot valve of embodiment 8, wherein a valving chamber within the valve body surrounds the valving member, the valving member dividing the valving chamber into an upper valving chamber and lower valving chamber.
12. The pilot valve of embodiment 11, wherein the upper valving chamber includes a hollow cylindrical region inside the guide tube.
13. The pilot valve of embodiment 8, wherein the length of the armature is less than or equal to eighty percent of the length of the guide tube.
14. The pilot valve of embodiment 10, wherein the insert channels are radially inward of the innermost peripheral surface of the guide tube permitting a fluid flow between the insert channels and the innermost peripheral surface of the guide tube.
15. A method of operating a pilot controlled valve, the method comprising the steps of:
   selectively sealing a main valve seat against a valving member to separate an inlet from an outlet of a valve body and to divide an upper valving chamber from a lower valving chamber;
   fluidly connecting the lower valving chamber to the upper valving chamber through a bleed passage defined by the valving member;
   unseating a pilot valve pad of an armature from a pilot valve seat inside a guide tube of a solenoid assembly to fluidly connect the upper valving chamber to the outlet;
   decreasing the pressure in an upper valving chamber to unseat the valving member from the main valve seat to open a main flow channel from the inlet over the main valve seat to the outlet.
16. The method of embodiment 15, further comprising the step of fluidly connecting the upper valving chamber to the outlet through a pilot flow passage inside an extended center post of the valving member.
17 The method of embodiment 15, wherein the step of unseating the valving member from the main valve seat further includes locating the valving member above the main valve seat and outside the outlet to fully open the main flow passage.
18. The method of embodiment 16, further comprising the step of locating the pilot valve seat on an end of an extended center post of the valving member and inside the guide tube.
19. The method of embodiment 16, further comprising locating the pilot valve pad on an end of the armature inside the guide tube.
20. The method of embodiment 18, further comprising the step of energizing the solenoid assembly to unseat the pilot valve seat inside the guide tube.

## Claims

1. A pilot operated valve comprising:
a valve body defining an inlet, an outlet and a main valve seat;
a valving member having a diaphragm and an insert, the insert defining a pilot valve seat and an insert stem, the valving member selectively sealing against the main valve seat to separate the inlet from the outlet;
a solenoid assembly comprising an armature having an armature end;
wherein the armature end and pilot valve seat are located inside the guide tube and wherein the armature end selectively seals against the pilot valve seat inside the guide tube.

2. The pilot operated valve of claim 1, wherein the insert comprise a central disk portion and an extended center post, the extended center post extending from the central disk portion axially away from the outlet, the extended center post defining the pilot valve seat located inside the guide tube.

3. The pilot operated valve of claim 2, wherein the extended center post includes insert ribs defining insert channels between the insert ribs, the insert channels extending axially from the central disk portion to the pilot valve seat along the extended center post, wherein preferably the valving member defines a bleed passage fluidly connecting the inlet to the inside of the guide tube.

4. The pilot valve of claim 2, wherein armature end comprises a pilot valve pad selectively sealing against the pilot valve seat, wherein preferably the insert defines an axially centered pilot valve passage fluidly connecting the inlet to the outlet when the pilot valve pad unseats from the pilot valve seat.

5. The pilot valve of claim 2, wherein in a fully open position of the pilot valve the insert stem is unseated from the main valve seat outside the outlet.

6. A pilot operated valve comprising:
a valve body defining an inlet, an outlet and a main valve seat;
a main flow channel defined by the valve body through the inlet, over the main valve seat to the outlet;
a valving member having a diaphragm and an insert, the insert defining a pilot valve seat and an insert stem, the valving member selectively sealing against the main valve seat to close the main flow channel;
a solenoid assembly comprising an armature having an armature end inside a guide tube, the armature end selectively sealing against the pilot valve seat inside the guide tube;
wherein, in a fully open position of the pilot valve, the insert stem is located above the main valve seat and outside the outlet when unseated from the main valve seat opening the main flow channel.

7. The pilot valve of claim 6, wherein the valving member comprises an insert having a central disk portion and an extended center post, the extended center post extending from the central disk portion axially away from the outlet and defining the pilot valve seat located inside the guide tube.

8. The pilot valve of claim 7, wherein center post defines insert channels extending from the central disk portion to the pilot valve seat, preferably wherein the insert channels are radially inward of the innermost peripheral surface of the guide tube permitting a fluid flow between the insert channels and the innermost peripheral surface of the guide tube.

9. The pilot valve of claim 6, wherein a valving chamber within the valve body surrounds the valving member, the valving member dividing the valving chamber into an upper valving chamber and lower valving chamber, wherein preferably the upper valving chamber includes a hollow cylindrical region inside the guide tube.

10. The pilot valve of claim 6, wherein the length of the armature is less than or equal to eighty percent of the length of the guide tube.

11. A method of operating a pilot controlled valve, the method comprising the steps of:
selectively sealing a main valve seat against a valving member to separate an inlet from an outlet of a valve body and to divide an upper valving chamber from a lower valving chamber;
fluidly connecting the lower valving chamber to the upper valving chamber through a bleed passage defined by the valving member;
unseating a pilot valve pad of an armature from a pilot valve seat inside a guide tube of a solenoid assembly to fluidly connect the upper valving chamber to the outlet;
decreasing the pressure in an upper valving chamber to unseat the valving member from the main valve seat to open a main flow channel from the inlet over the main valve seat to the outlet.

12. The method of claim 11, further comprising the step of fluidly connecting the upper valving chamber to the outlet through a pilot flow passage inside an extended center post of the valving member.

13. The method of claim 11, wherein the step of unseating the valving member from the main valve seat further includes locating the valving member above the main valve seat and outside the outlet to fully open the main flow passage.

14. The method of claim 12, further comprising the step of locating the pilot valve seat on an end of an extended center post of the valving member and inside the guide tube, preferably further comprising the step of energizing the solenoid assembly to unseat the pilot valve seat inside the guide tube.

15. The method of claim 12, further comprising locating the pilot valve pad on an end of the armature inside the guide tube.
